# Europäisches Patentamt
# European Patent Office
# Office européen des brevets

(19)

(11) Numéro de publication: **0 112 189 B1**

(12) **FASCICULE DE BREVET EUROPEEN**

(45) Date de publication du fascicule du brevet: **14.10.87**

(51) Int. Cl.⁴: **G 01 V 1/40**, G 01 V 11/00

(21) Numéro de dépôt: **83401433.4**

(22) Date de dépôt: **12.07.83**

(54) **Procédé et dispositif pour coupler un détecteur sismique à la paroi d'un forage.**

(30) Priorité: **13.07.82 FR 8212252**

(43) Date de publication de la demande:
**27.06.84 Bulletin 84/26**

(45) Mention de la délivrance du brevet:
**14.10.87 Bulletin 87/42**

(84) Etats contractants désignés:
**AT DE FR GB IT NL SE**

(56) Documents cités:
**FR-A-2 138 335**
**US-A-2 846 662**
**US-A-2 876 413**
**US-A-3 028 542**
**US-A-4 120 353**

**THE OIL AND GAS JOURNAL, vol. 77, no. 28, juillet 1979, pages 139-143, Tulsa, Okla., US; D.G. (PETER) LANG: "Technique expands borehole data"**

(73) Titulaire: **SOCIETE DE PROSPECTION ELECTRIQUE SCHLUMBERGER**
**42, rue Saint-Dominique**
**F-75340 Paris Cedex 07 (FR)**
(84) **FR IT**

(73) Titulaire: **Schlumberger Limited**
**277 Park Avenue**
**New York, N.Y. 10172 (US)**
(84) **DE GB NL**

(72) Inventeur: **Delpuech, Alain Georges Marie**
**12, rue du Coteau**
**F-92150 Le Plessis Robinson (FR)**
Inventeur: **Decorps, Jean-Luc Roger Auguste Louis**
**6, 8 rue Jenner**
**F-75013 Paris (FR)**

(74) Mandataire: **Le Cren, Roger et al**
**Etudes et Productions Schlumberger B.P. 202 26, rue de la Cavée**
**F-92142 Clamart, Cédex (FR)**

Courier Press, Leamington Spa, England.

## Description

La présente invention concerne l'acquisition de signaux sismiques à différents niveaux dans un forage, en réponse à la génération d'ondes sismiques par une source placée en surface ou au voisinage de la surface.

Lorsqu'on enregistre à différents niveaux dans un forage, au moyen d'un détecteur, les ondes sismiques produites par une source, on obtient une série de signaux sismiques que l'on regroupe, après traitement approprié, pour former un profil sismique vertical. L'analyse d'un tel profil fournit des indications très précieuses sur la structure des formations géologiques traversées par le forage, et notamment sur la position et le pendage des couches réflexives, y compris de celles qui sont situées à une profondeur plus grande que le fond du forage.

Il est connu d'utiliser à cet effet une sonde comprenant un corps allongé, des moyens de détection d'ondes sismiques, un organe d'ancrage articulé sur le corps, un dispositif élastique agissant pour écarter l'organe d'ancrage du corps de sonde de façon à le placer en contact avec la paroi du forage et un dispositif moteur capable de placer l'organe d'ancrage en position repliée contre l'action du dispositif élastique (Publication "Oil and Gas Journal", Vol. 77, No. 28, juillet 1979, "Technique expands borehole data" auteur D.G. (Peter) Lang).

Pour que la qualité des signaux enregistrés par le détecteur soit satisfaisante, il faut que ce dernier soit convenablement couplé à la paroi du forage. Les dispositifs connus utilisant un dispositif élastique pour réaliser l'ancrage ne permettent d'obtenir un couplage satisfaisant lorsque la formation au niveau considéré est mal consolidée.

L'invention vise à permettre l'acquisition de signaux sismiques dans un forage de façon à obtenir dans tous les cas une qualité satisfaisante des signaux.

L'invention a pour objet un procédé pour coupler d'une manière optimale un détecteur sismique à la paroi d'un forage, le détecteur étant placé dans une sonde suspendue à un câble à une profondeur sélectionnée, ladite sonde comprenant un corps allongé, un patin d'ancrage placé à l'extrémité de bras-supports articulés sur ledit corps, ledit patin étant appliqué à la paroi du forage par des moyens élastiques, et un dispositif moteur adapté à fermer lesdits bras-supports, caractérisé par le fait

— que l'on applique au patin, par l'intermédiaire de ses bras-supports, au moyen dudit dispositif moteur, une force additionnelle qui tend à coupler, d'une manière rigide, le corps de sonde à la paroi du forage,

— que l'on mesure en permanence l'effort exercé sur le patin au moyen d'un capteur de force placé dans le patin,

— et que l'on arrête et bloque le dispositif moteur lorsque la valeur d'effort ainsi mesurée atteint une valeur optimale déterminée.

Cette valeur est choisie de préférence égale à environ deux fois le poids de la sonde dans l'air.

L'invention sera bien comprise à la lecture de la description ci-après, faite en référence aux dessins annexés.

Dans les dessins

— la figure 1 représente une installation pour la prospection sismique dans un forage;

— la figure 2 montre à plus grande échelle la sonde d'acquisition sismique représentée à la figure 1;

— la figure 3 est une vue schématique de la section d'ancrage de la sonde;

— la figure 4 montre en coupe axiale le dispositif de la section d'ancrage;

— la figure 5 montre un détail du dispositif d'accouplement;

— la figure 6 représente l'articulation du bras d'ancrage sur la sonde;

— la figure 7 est une coupe selon le plan VII—VII de la figure 6;

— la figure 8 est une vue en coupe longitudinale du patin d'ancrage;

— la figure 9 montre le capteur de force logé dans le patin;

— la figure 10 montre le dispositif d'électrode logé dans le patin.

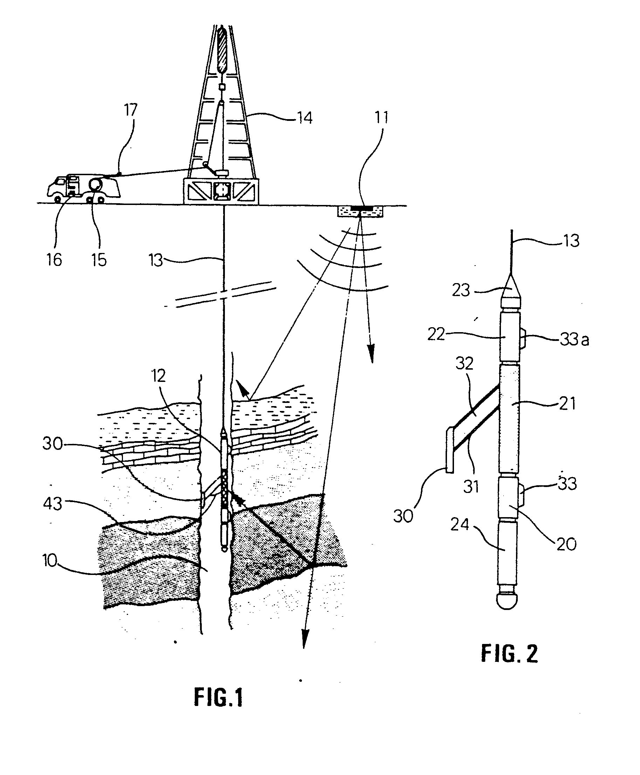

On a représenté à la figure 1 un forage d'exploration 10 traversant des formations géologiques. Une source d'ondes sismiques 11 telle qu'un canon à air est placée en surface avec un certain décalage par rapport à la tête du forage. Les ébranlements sismiques produits par la source sont détectés au moyen d'une sonde d'acquisition sismique 12 descendue dans le forage.

La sonde 12 est suspendue à l'extrémité d'un câble électrique 13. Le câble 13 passe sur des poulies de la tour de forage 14 et est enroulé sur un treuil 15 porté par un équipement de surface 16. L'équipement de surface fournit à la sonde 12, par l'intermédiaire du câble 13, l'alimentation électrique et les signaux de commande nécessaires à son fonctionnement. En retour, les signaux sismiques produits par le sonde sont acheminés par le câble et enregistrés par l'équipement de surface. Un dispositif schématisé en 17, associé au treuil 15, mesure le défilement du câble et permet de déterminer la profondeur de la sonde, en vue de faire correspondre à chaque signal sismique enregistré la profondeur de la sonde lors de l'enregistrement.

Comme le montre mieux la figure 2, la sonde 12 comprend essentiellement quatre sections: une section de détection 20, une section d'ancrage 21 au-dessus de la section 20, destinée à assurer un couplage approprié de la section de détection avec la formation géologique, une cartouche électronique supérieure 22 reliée au câble par une tête de connection 23, et une cartouche électronique 24 formant l'extrémité inférieure de la sonde. La cartouche 24 est reliée électriquement à la tête 23 et contient des circuits pour le pré-traitement des signaux de détection produits par la section 20 et un dispositif de télémesure constituant l'interface avec le câble 13 en vue de la transmission des signaux. La cartouche supérieure 22 fournit la tension d'alimentation à la section d'ancrage en fonction de signaux adressés par l'équipement de surface et par d'autres sections de la sonde.

La section de détection 20 comprend au moins un détecteur tel qu'un géophone ou un accéléromètre. De façon appropriée, il est prévu trois détecteurs disposés selon une configuration triaxiale.

Pour obtenir des signaux de qualité satisfaisante, il est indispensable de coupler de façon optimale la section de détection à la formation. Pour cela, la section d'ancrage comporte un patin 30 destiné à s'ancrer dans la paroi du forage et porté par deux bras 31 et 31 articulés sur le corps de la sonde, et au moins sensiblement parallèles, et du côté opposé au patin d'ancrage, la section de détection et la cartouche 22 comportent des éléments d'appui respectifs 33 et 33a fournissant une surface de contact appropriée avec la paroi.

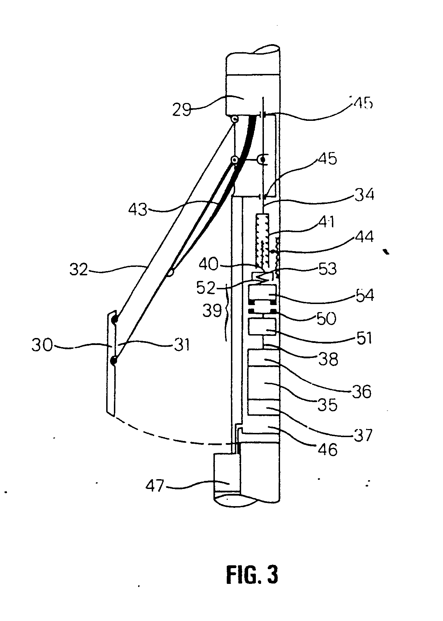

La figure 3 est un schéma fonctionnel de la section d'ancrage. La force d'ancrage est transmise au patin 30 par le bras inférieur 31. Le pivotement du bras 31 est provoqué par la translation d'une tige d'actionnement 34. La liaison entre le bras 31 et la tige 34 sera décrite en détail ci-après. La force d'ancrage est fournie par un moteur asynchrone réversible 35 du type moteur-couple, muni d'un réducteur de sortie 36 et d'un frein électromagnétique 37 actif en l'absence de courant. L'arbre de sortie 38 du réducteur 36 est relié par l'intermédiaire d'un dispositif d'accouplement 39, qui sera décrit en détail ci-après, à une vis à billes 40 en prise avec un écrou 41 qui entraîne la tige d'actionnement 34.

En outre, un dispositif de rappel 43 agit en permanence sur les bras 31, 32 dans le sens de leur ouverture.

On a également schématisé sur la figure 3 un potentiomètre 44 qui permet de mesurer le déplacement de l'écrou 41, donc l'écart du patin d'ancrage par rapport à la sonde, cet écart étant indicatif du diamètre du forage.

Des joints 45 autorisent le déplacement en translation de la tige 34 tout en interdisant l'entrée de la boue de forage dans l'espace intérieur 46 contenant l'ensemble moteur 35—38, le dispositif d'accouplement 39 et le système vis-écrou 40—41. Un dispositif de compensation de pression 47, d'un type bien connu dans les sondes de diagraphie, est placé à l'extrémité inférieure de la section d'ancrage. Il a pour fonction de mettre l'espace intérieur 46 en équilibre de pression avec la boue de forage. La pression sur les faces opposées des joints 45 est ainsi sensiblement la même.

Le dispositif d'accouplement 39 tel que représenté à la figure 3 comprend essentiellement un dispositif d'embrayage 50, une logique mécanique 51 commandant l'embrayage ou le débrayage en fonction du sens de rotation du moteur et des efforts s'exerçant sur le patin, un ressort 52 et une butée 53, et un limiteur de couple 54.

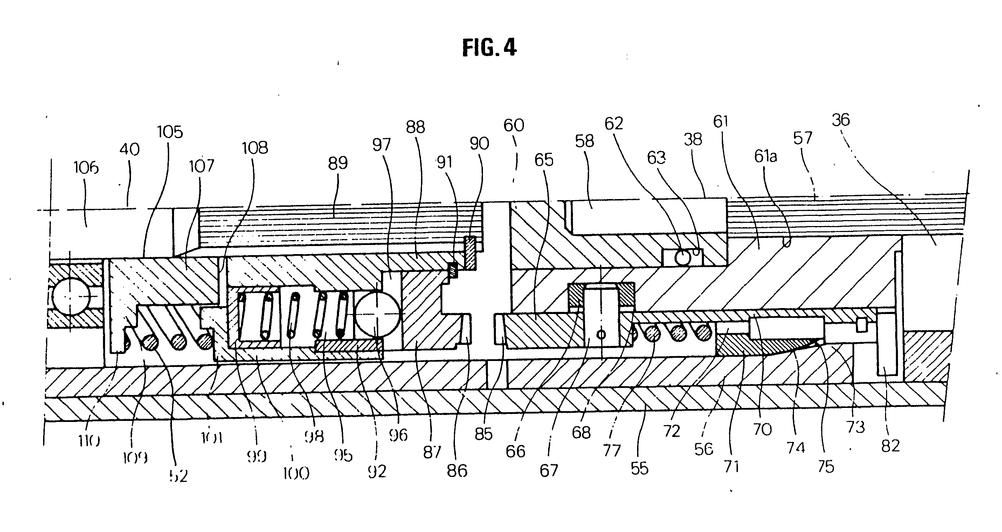

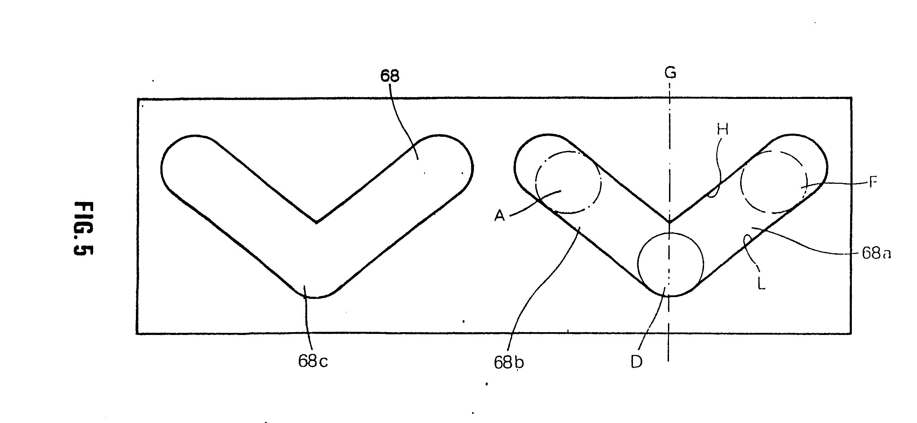

Ces éléments vont être décrits en détail ci-après en référence aux figures 4 et 5.

On retrouve sur la figure 4 le réducteur 36 et son arbre de sortie 38, d'un côté, et l'extrémité de la vis à billes 40, du côté opposé. On a représenté la gaine extérieure 55 faisant partie du corps de la sonde et une enveloppe tubulaire 56 fixée à la gaine 55.

L'arbre 38 comporte une portion cannelée 57 et une portion d'extrémité 58 de plus petit diamètre qui est filetée.

Sur l'extrémité de l'arbre 38 est vissée une bague 60. Une douille 61 entourant avec du jeu la bague 60 comporte des cannelures 61a engagées sur les cannelures de la portion d'arbre 57, la douille 61 étant en butée sur le boîtier du réducteur 36. La bague 60 et la douille 61 sont ainsi solidaires en rotation de l'arbre 38. Une goupille 62 traverse la douille 61 et passe dans une gorge 63 formée sur la périphérie de la bague 60. Cette goupille permet d'extraire la douille 61 lorsqu'on dévisse la bague 60.

Autour de la douille 61 est placé un manchon d'embrayage 65. Le manchon 65 est lié à la douille 61 par l'engagement de deux galets diamétralement opposés 66, montés sur des tétons respectifs 67 fixés au manchon 65, dans des rainures de came hélicoïdales respectives 68 formées dans la périphérie extérieure de la douille 61. La figure 5 montre en vue développée la forme des rainures 68. Chaque rainure de came 68 comprend deux tronçons 68a, 68b symétriques par rapport à une génératrice G de la douille. Les tronçons 68a, 68b se rejoignent du côté de l'arbre d'entraînement en une portion centrale 68c. La valeur préférée pour l'angle entre les tronçons de rainure 68a et 68b est d'environ 90°, ainsi que le montre la figure 5.

Des moyens sont prévus pour immobiliser en rotation le manchon 65 lorsque la position axiale de celui-ci se trouve dans une plage déterminée, afin que la rotation de l'arbre 38 et donc de la douille 61 provoque une translation du manchon 65. A cet effet, le manchon 65 comporte du côté entraînement une partie 70 de diamètre extérieur plus petit que la partie qui porte les tétons 67. Dans l'espace annulaire ainsi ménagé entre le manchon et l'enveloppe fixe 56 est logée une bague de frottement 71 liée en rotation au manchon 65 mais mobile axialement par rapport à celui-ci. La bague 71 comporte intérieurement une rainure axiale 72 dans laquelle est engagée une clavette 73 fixée sur le manchon 65. La bague de frottement 71 présente une surface extérieure 74 de forme sphérique, et la surface intérieure de l'enveloppe 56 en regard de la bague 71 comporte une partie tronconique 75. Un ressort hélicoïdal 77 est monté entre l'épaulement terminant la partie de faible diamètre 70 et la bague de frottement 71. Lorsque les surfaces 74, 75 sont en contact, comme représenté sur la figure 3, le frottement dû à la force exercée par le ressort 77 est tel que le manchon 65 est empêché de tourner avec la douille 61. Une rotation de la douille 61 aura alors pour effet un déplacement en translation du manchon 65.

En outre, un circlip 80 est monté dans une gorge au voisinage de l'extrémité côté réducteur du manchon 65. Ce circlip sert à pousser la bague de frottement 71 contre l'action du ressort 77 après un

certain déplacement axial du manchon, réalisant ainsi une liaison avec course morte entre la bague 77 et le manchon 65. Le déplacement de la bague 71 qui en résulte fait disparaître le frottement entre les surfaces 74, 75 et permet au manchon 65 d'être entraîné en rotation par l'arbre.

De plus, un contact électrique 82 lié à l'enveloppe tubulaire 56 est placé au voisinage du réducteur 36. Ce contact est actionné par le manchon 65, lorsque celui-ci vient occuper sa position extrême proche du réducteur. L'impulsion produite par ce contact sert à couper l'alimentation du moteur 35.

Le manchon 65 comporte à son extrémité opposée au réducteur un plateau denté 85 susceptible d'engrener avec un plateau denté 86 formé sur une contre-bague 87. Les plateaux dentés 85 et 86 sont constitués de dentures radiales de section triangulaire.

La contre-bague 87 est montée rotative autour d'une douille cannelée 88 liée en rotation à la vis 40, dont l'extrémité 89 comporte des cannelures correspondantes. Des circlips d'arrêt 90 et 91 sont montés respectivement sur la vis 40 et sur la douille 88 pour servir de butée axiale respectivement à la douille 88 et à la contre-bague 87.

Du côté opposé, la surface radiale de la contre-bague 87 est séparée par un faible jeu d'une collerette 92 prolongeant radialement la douille 88. La collerette 92 comporte une pluralité de trous 95 dirigés axialement dont chacun reçoit une bille 96, et la contre-bague 87 comporte de même une pluralité de rainures radiales 97 dans lesquelles pénètrent respectivement les billes 96. Chacune des billes 96 est repoussée élastiquement contre le fond de la rainure 97 correspondante par un ressort hélicoïdal 98 prenant appui sur un anneau 99 à section en U, lequel anneau est immobilisé en rotation par rapport à la douille 88. L'anneau 99 est positionné axialement par une bague de réglage 110 vissée sur la surface extérieure filetée de la collerette 92 et comprenant une portion radiale 101 en contact avec l'anneau 99.

L'ensemble formé par la douille 88, les billes 96 et les éléments 98—100 constitue le limiteur de couple sus-mentionné. En effet, les billes 96 maintenues contre le fond de rainures 97 par l'action des ressorts 98 transmettent normalement le couple de la contre-bague 87 à la douille 88. Mais au-delà d'une certaine valeur, les billes s'écartent du fond de rainures en comprimant les ressorts 98 et le couple n'est plus transmis.

Une bague 105 est vissée sur une partie filetée 106 de la vis 40, qui fait suite à l'extrémité 89. La bague 105 comporte successivement, en s'éloignant de l'extrémité de la vis, une portion de petit diamètre 107 qui forme butée par sa face d'extrémité radiale pour la douille 88 et constitue la butée 53 mentionnée ci-dessus en référence à la figure 3, une portion 109 de diamètre intermédiaire et une partie 110 de plus grand diamètre qui sert d'appui au ressort hélicoïdal 52 également mentionné ci-dessus, lequel ressort agit sur la portion radiale 101 de la bague de réglage 100, et donc indirectement sur la contre-bague 87 portant le plateau denté 86.

Le système vis-écrou 40, 41 ne présente pas de particularité exigeant une description détaillée. L'écrou 41 est, de façon classique, assujetti à se déplacer uniquement en translation, de sorte qu'une rotation de la vis à billes 40 dans un sens provoque une translation de l'écrou 41 dans la direction correspondante.

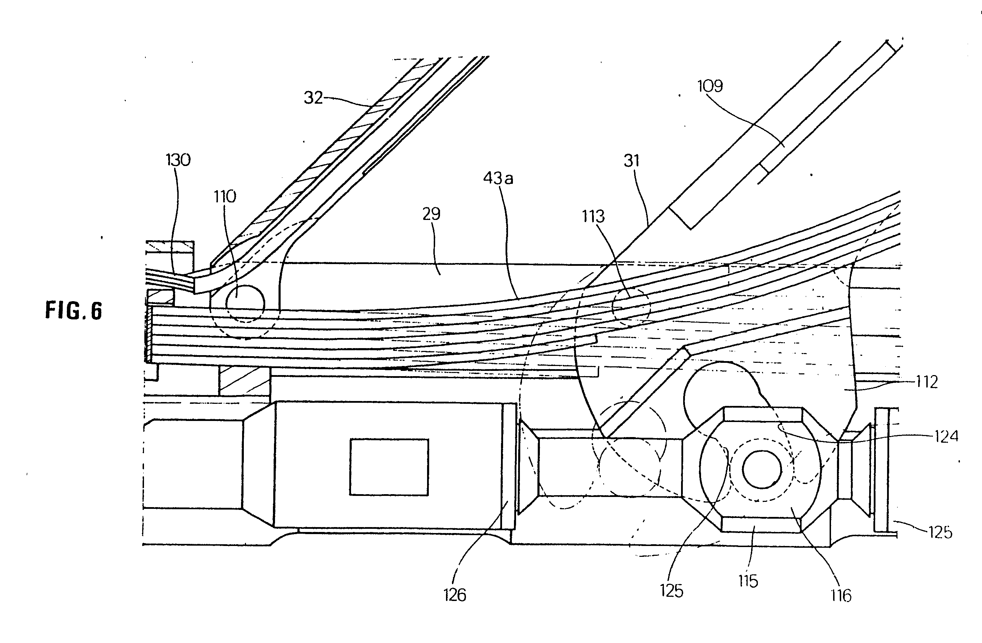

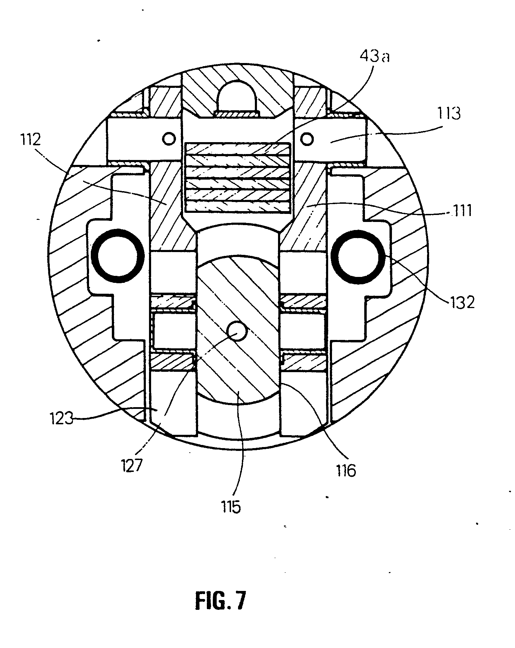

Les figures 6 et 7 montrent plus en détail l'articulation des bras 31 et 32 sur la sonde. Le bras supérieur 32 est reliée au corps de sonde 29 par un pivot 110. Le bras inférieur 31 qui transmet les efforts au patin 30, est formé de deux flasques parallèles identiques réunis par des entretoises telles que 109, qui se prolongent par des crosses identiques 111, 112 écartées l'une de l'autre. Les crosses 111, 112 sont traversées par un pivot 113 lié au corps de sonde, les axes des pivots 110 et 113 étant perpendiculaires à l'axe de la sonde et équidistants de cet axe.

Les crosses 111, 112 entourent à leur extrémité une partie 115 de la tige d'actionnement 34, laquelle partie comporte des méplats 116 parallèles au plan de pivotement du bras 31. Sur cette partie 115 sont fixés de part et d'autre des galets 121. Les crosses 111, 112 comportent chacune une fente allongée 123 engagée autour d'un galet 121 de sorte qu'un déplacement de la tige 34 provoque un pivotement du bras 31 autour de l'axe 113. La figure 6 montre en trait plein la position d'ouverture maximale du bras 31 et en trait mixte la position de fermeture.

Les parois 124, 125 des fentes 123 en contact avec les galets 121 ont sensiblement la forme de développantes de cercle. Une développante de cercle est le lieu géométrique d'un point d'une droite D qui roule sans glisser sur un cercle C. Dans le cas présent, la droite D est l'axe de la tige 34 et le cercle C est centré sur le centre de rotation du bras 31, c'est-à-dire l'axe du pivot 113, et tangent à l'axe de la tige 34. Au cours de la rotation du bras 31, un point lié à la tige 34 et en contact avec un flasque du bras 31 décrira donc une développante de cercle. Ces courbes ont pour propriété d'avoir une tangente qui est constamment perpendiculaire à la droite D, c'est-à-dire en l'occurrence à la tige 34. L'avantage est qu'un effort peut être transmis au bras sans introduire de composante radiale sur la tige d'actionnement 34.

On notera également, en référence aux figures 6 et 7, qu'un ressort à lames 43a faisant partie du dispositif de rappel 43 sus-mentionné est fixé au corps de sonde 29 au voisinage du pivot 110 du bras supérieur 32 et qu'il passe entre les crosses 111, 112 du bras 31. D'autre part, la tige 34 traverse, de part et d'autre de la zone d'engagement avec le bras 31, des boîtiers 125, 126 à l'intérieur desquels sont montés les joints 45 susmentionnés. L'huile mise à la pression de la boue du forage par le dispositif de compensation 47 peut circuler jusqu'à l'extrémité de la tige 34 par un passage central 127.

On a aussi représenté à la figure 6 des conducteurs 130 portés par le bras 32, qui relient le patin 30 à la cartouche 22, et à la figure 7 des gaines 131 recevant les conducteurs électriques qui relient la cartouche 22 à la section de détection et à la section d'ancrage, notamment pour la commande du moteur 35.

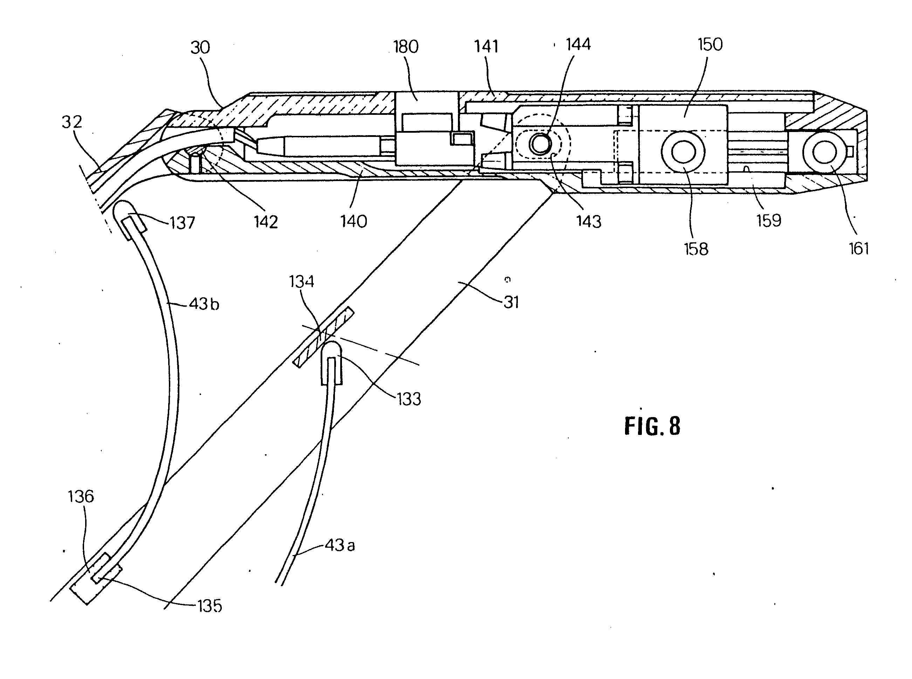

La figure 8 précise l'agencement du dispositif de rappel 43. Le ressort à lames 43a mentionné ci-dessus en référence à la figure 6, qui est fixé à une extrémité au corps de sonde, agit par son extrémité opposée 133 sur une pièce d'âme 134 du bras 31 placée entre les flasques, un glissement relatif entre l'extrémité 133 et la pièce 134 se produisant au cours du pivotement du bras 31. Un second ressort 43b, formé d'une lame unique et donc plus léger que le ressort 43a, est fixé par une extrémité 135 à une autre pièce d'âme 136 du bras 31, placée plus près du pivot 113 que la pièce 134. L'autre extrémité 137 du ressort 43b agit sur le bras supérieur 32 au voisinage de son extrémité, avec là aussi un glissement lorsque les bras pivotent.

La figure 8 montre plus en détail le patin d'ancrage 30. Le patin 30, comme on l'a vu, est monté à l'extrémité du bras supérieur 32 et du bras inférieur 31, dont un seul des flasques est représenté sur la vue en coupe de la figure 8, lesquels flasques entourent le patin.

Le patin 30 comprend un corps évidé 140 du côté intérieur et une plaque d'usure 141 destinée au contact avec la paroi, fixée sur le corps de patin 140. La plaque d'usure 141 est munie sur sa surface de stries en vue d'optimiser l'ancrage dans la paroi.

Le corps de patin 140 est relié à l'extrémité du bras supérieur 32 par un pivot 142. Il comporte d'autre part, sensiblement en son milieu, des ouvertures 143 pratiquées dans ses parois latérales. Les ouvertures 143 ont la forme de rectangles arrondis aux sommets, et reçoivent un pivot 144 lié aux flasques du bras inférieur 31.

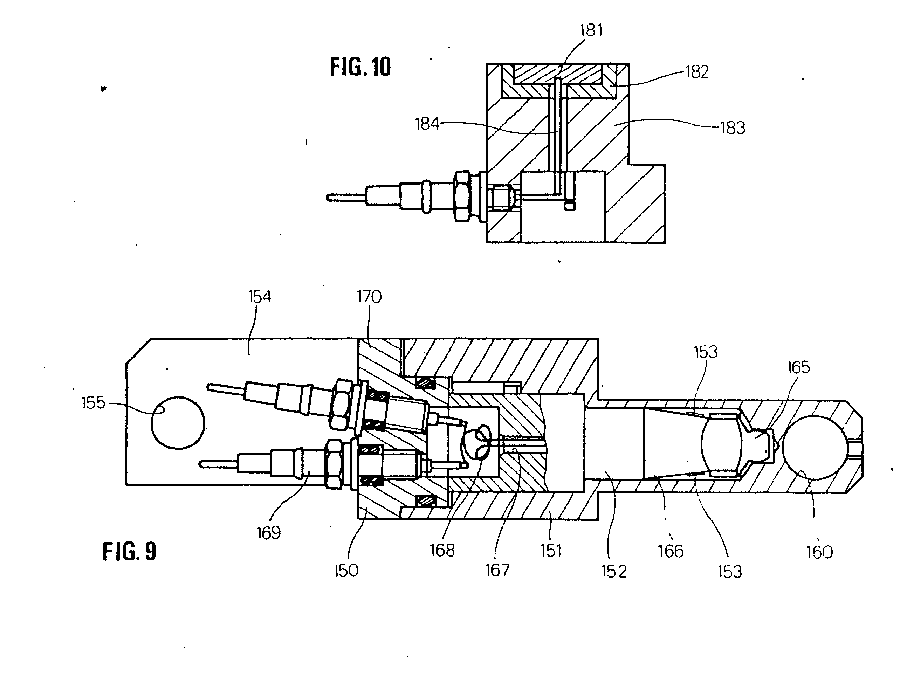

Un capteur de force, désigné dans son ensemble par le repère 150, est logé dans le corps de patin 140. Ce capteur, représenté plus en détail sur la figure 9, comprend en tant qu'éléments sensibles des jauges de contrainte. Il comporte une gaine 151 résistant à la pression, de section rectangulaire, à l'intérieur de laquelle est placé un élément de flexion 152 portant les jauges de contrainte 153.

La gaine 151 se prolonge du côté supérieur par deux flasques 154 munis de trous 155 recevant sans jeu le pivot 144 lié au bras 31. La gaine 151 porte en outre, à peu près en son milieu, deux galets 158 engagés dans des fentes allongées 159 formées dans les parois latérales du corps de patin. Au voisinage de son extrémité inférieure, la gaine 151 présente un trou 160 dans lequel est engagée une tige 161 dont les extrémités pénètrent respectivement dans les fentes 159.

En résumé, le corps de patin 140 est monté pivotant par rapport au bras supérieur 32 et il est relié au bras inférieur 31 par l'intermédiaire du capteur de force 150 qui, d'une part, est mobile en translation par rapport au corps de patin, et d'autre part, est lié au bras 31 par le pivot 144, le débattement entre le pivot 144 et le corps de patin étant limité par les bords des ouvertures 143 formées dans le corps de patin. Il en résulte que le patin a la possibilité de basculer légèrement, dans un sens ou dans l'autre, par rapport à la position médiane, parallèle à l'axe de la sonde, qui est celle représentée sur la figure 8. Lorsque le patin s'écarte ainsi de sa position médiane, le bras supérieur 32 pivote légèrement par rapport à la sonde en s'écartant de sa position parallèle au bras inférieur 31.

Cette possibilité de basculement du patin 30 lui permet d'épouser étroitement la paroi du forage même si celle-ci présente une irrégularité à l'endroit du contact avec le patin. Ceci est avantageux pour l'obtention d'un bon ancrage. En outre, les efforts sur le patin seront répartis régulièrement sur toute sa surface, de sorte que la mesure effectuée au moyen du capteur de force, qui porte sur l'effort au niveau du pivot 144, sera bien représentative de l'effort sur l'ensemble du patin.

On notera que l'agencement du dispositif de rappel, avec les deux ressorts 43a et 43b, élimine les risques de coincement de l'ensemble bras-patin dans la position de fermeture qui auraient pu résulter du basculement du patin.

En ce qui concerne le capteur de force, il faut indiquer que l'élément de flexion comporte une extrémité inférieure 165 analogue à une rotule engagée dans le fond du logement formé à l'intérieur de la gaine 151. Les jauges de contrainte 153 sont placées sur des méplats inclinés 166 formés sur des côtés opposés de l'élément de flexion. Sur chaque méplat sont disposées deux jauges, et les quatre jauges sont connectées selon un montage en "pont complet", de manière classique dans la technique des mesures par jauges de contrainte. L'élément de flexion comporte des conduits tels que 167 pour le passage des conducteurs électriques 168 reliant le circuit des jauges à quatre connecteurs 169 (deux pour l'alimentation et deux pour transmettre le signal de détection) qui traversent un bloc d'étanchéité 170 fixé à la gaine 151. Des conducteurs, non représentés sur la figure 8, et portés par le bras 32, relient ces connecteurs à la cartouche électronique 22.

Le capteur de force ainsi inséré dans le patin fournit une indication de l'effort effectif sur le patin. La mesure de l'effort d'ancrage fournie par le capteur présente une excellente reproductibilité, car comme il s'agit d'une mesure faite directement au niveau du patin, les facteurs d'erreur sont minimisés. Cette mesure est utilisée pour arrêter le fonctionnement du moteur 35 lorsque l'effort d'ancrage a atteint une valeur déterminée considérée comme satisfaisante. Cette valeur est choisie de façon appropriée égale à environ deux fois le poids de la sonde dans l'air.

En outre, la valeur de mesure fournie par le capteur est transmise via la cartouche 24 à l'équipement de surface, ce qui permet de surveiller la qualité de l'ancrage au cours de la série de tirs effectuée au même niveau. Il peut arriver,

en particulier dans les formations molles, que la force d'ancrage diminue après quelques tirs. Grâce au capteur monté sur le patin, cette diminution sera détectée et il sera possible d'y remédier en remettant en marche le moteur, qui s'arrêtera automatiquement une fois la force d'ancrage revenue à la valeur désirée. Une telle possibilité est d'un grand intérêt étant donné que, comme on l'a vu, la force d'ancrage est un paramètre essentiel pour la qualité des signaux de détection sismiques.

Le patin porte en outre un dispositif 180 destiné à émettre un courant électrique pour évaluer la résistivité de la zone superficielle de la formation traversée par le forage. Ce dispositif, représenté plus en détail à la figure 10, comprend une électrode 181 en matière conductrice placée sur un isolant 182 logé lui-même dans un évidement d'un support 183 en matière conductrice faisant office de masse. Ce support comporte un conduit pour le passage d'un conducteur électrique 184 relié à l'électrode 181. La réception du courant électrique ainsi émis peut être assurée par la tête de connection 23 reliant la cartouche 22 au câble 13. On peut ainsi réaliser une diagraphie de microrésistivité qu'on pourra corréler avec d'autres diagraphies effectuées dans le même forage pour déterminer avec précision la profondeur des niveaux d'ancrage.

On va maintenant décrire le fonctionnement de la sonde décrite ci-dessus, au cours d'un cycle complet de mesures.

On descend la sonde dans le forage avec les bras 31, 32 en position repliée. Dans cette position, le moteur 35 n'est pas alimenté et est bloqué par son frein 37. Le dispositif d'accouplement est embrayé, c'est-à-dire que les plateaux dentés 85, 86 sont en prise et la douille 88 est en butée contre la pièce 107. Le couple résistant fourni par le moteur s'oppose à l'ouverture des bras sous l'action du ressort à lames 43. Chacun des galets 66 occupe une position avancée F dans le tronçon 68a de sa rainure de came, en contact avec la paroi inférieure L du dit tronçon.

Lorsque la sonde atteint le niveau $H_1$ correspondant à la première mesure prévue, on met en marche le moteur 35 dans le sens inverse des aiguilles d'une montre. Les bras 31, 32 peuvent alors s'écarter sous l'action des ressorts à lames 43. Dans cette phase d'ouverture, le moteur 35 agit seulement pour limiter la vitesse d'ouverture des bras. Les galets 66 sont maintenus en contact avec les parois inférieures L par l'action des ressorts 43, de sorte que le ressort 52 ne peut pas agir pour écarter la douille 88 de la butée 107.

Lorsque le patin 30 arrive au contact de la paroi du forage, l'action des ressorts 43 cesse. Le moteur 35 continuant à tourner dans le même sens, les galets 66 viennent en contact avec les parois supérieures H des tronçons de rainure 68a. Le ressort 52 repousse alors la douille 88 hors de contact de la butée 107 et aussi le manchon 65. La bague de frottement 71 déplacée avec le manchon vient frotter sur la portée conique 75.

Lorsque la douille 88 arrive en butée sur le circlip 90, l'action du ressort 52 cesse. La poursuite de la rotation du moteur 35, étant donné que la manchon 65 est bloqué en rotation par le frottement de la bague 71, provoque un déplacement des galets 66 dans les rainures de came vers la portion centrale 68c (position D des galets). Le machon 65 se déplace ainsi en direction du réducteur, ce déplacement amenant un découplement complet des plateaux dentés 85, 86. Le dispositif est donc placé en position débrayée. Lorsque le manchon 65 atteint la position extrême représentée à la figure 4, le micro-contract 82 est excité et l'impulsion produite commande l'arrêt du moteur 35.

Pour effectuer l'ancrage du patin dans la paroi, on remet en marche le moteur 35, toujours dans le sens inverse. Les galets 66 avancent alors dans les tronçons 68b des rainures de came. Le plateau denté 85 entre en contact avec le plateau 86. Au cours de ce premier déplacement du manchon, la bague de frottement 71 n'est pas déplacée.

La rotation du moteur se poursuivant, les galets 66 continuent d'avancer et le manchon 65 pousse la douille 88 contre l'action du ressort 52. Ce faisant, le circlip 80 repousset la bague de frottement 71, de sorte que le frottement qui empêchait le manchon 65 de tourner disparaît progressivement. Mais le couple moteur n'est réellement transmis à la douille 88 qu'à partir du contact de celle-ci avec la butée 107. Jusque là, le couple moteur n'a servi qu'à vaincre l'action du ressort 52. Lorsque ce contact se réalise, les galets 66 ont atteint leur position extrême A dans les tronçons 68b.

A partir du dit contact, le dispositif d'accouplement étant en position embrayée, le couple moteur est transmis à la vis 40. La tige 34 liée à l'écrou 41 se déplace en direction du réducteur pour ancrer le patin dans la paroi. Ce déplacement de la tige est très limité, de l'ordre de quelques millimètres.

Le capteur 150 adresse à la cartouche 22 un signal représentatif de l'effort d'ancrage sur le patin. Lorsque l'effort atteint la valeur déterminée sus-mentionnée, correspondant à un ancrage satisfaisant, la cartouche 22 commande l'arrêt du moteur 35.

La phase qui suit est la phase d'acquisition sismique proprement dite au niveau considéré. On effectue plusieurs tirs successifs au moyen de la source 11, et les ondes sismiques qui se sont propagées dans les formations sont détectées par la section de détection. Les signaux de détection produits à la suite des tirs respectifs sont transmis par la cartouche 24 et le câble 13 à l'équipement de surface 16, où ils sont enregistrés sur un support graphique et sur une bande magnétique.

Pendant toute cette phase, la position des éléments de la section d'ancrage ne varie pas: moteur bloqué par son frein, dispositif d'accouplement embrayé. La seule différence avec la position de fermeture est que les galets 66 sont dans les tronçons de rainure 68b au lieu d'être dans les tronçons de rainure 68a.

Comme on l'a indiqué plus haut, la surveillance de la force d'ancrage permet de remédier à une éventuelle diminution de cette force au cours de la phase d'acquisition sismique. Il suffit pour cela de remettre en marche le moteur 35, toujours dans le sens inverse. Le moteur sera arrêté dès que la force d'ancrage atteindra la valeur souhaitée.

Après cette phase de mesure, il s'agit de désancrer le patin 30. On met en marche le moteur 35 dans le sens des aiguilles d'une montre (sens direct), ce qui met fin à l'action du frein 37. Aussi longtemps qu'un effort sur le patin dû à l'élasticité de la formation s'exerce dans le sens du désancrage sur la vis 40, les galets 66 restent dans la position A. Lorsque cet effort s'annule, le ressort 52 repousse la douille 88 hors de contact avec la butée 107. Le déplacement correspondant du manchon 65 permet à la bague de frottement 71 de revenir en contact avec la portée conique 75. L'action du ressort 52 cesse lorsque la douille 88 vient buter sur le circlip 90. Le manchon 65 se trouve alors immobilisé en rotation et subit par suite de la rotation du moteur une translation en direction du réducteur, au début de laquelle le plateau denté 85 cesse d'être en prise avec le plateau denté 86.

A la fin de ce déplacement, les galets 66 ont atteint la position D dans la portion centrale des rainures de came, et le manchon 65 actionne le contact 82, de sorte que le moteur 35 s'arrête. Le patin 30 est maintenu en contact avec la paroi du forage par les ressorts 43.

La phase suivante est le déplacement de la sonde du niveau $H_1$ à un second niveau de measure $H_2$., par enroulement du câble 13 sur son treuil. Au cours de ce déplacement, le moteur 35 reste à l'arrêt, le dispositif d'accouplement conserve la position débrayée, les galets 66 restant en position D, et le patin glisse sur la paroi du forage, le contact étant maintenu en contact avec la paroi par les ressorts 43.

Pendant ce déplacement, l'électrode 181 reste donc en contact avec la paroi. Elle est alimentée en courant tout au long du déplacement. Le courant recueilli après passage dans la formation est, comme on l'a vu, indicatif de la résistivité d'une zone de faible épaisseur entourant le forage.

Lorsque la sonde a atteint le deuxième niveau de mesure $H_2$, on répète les opérations d'ancrage, d'acquisition sismique, et de désancrage, puis on remonte la sonde jusqu'à un troisième niveau de mesure $H_3$, etc.

On observera que comme le patin reste constamment en contact avec la paroi, les seules opérations mécaniques à exécuter à chaque niveau sont l'ancrage et le désancrage du patin, et qu'on n'a pas à ouvrir et à fermer les bras portant le patin à chaque niveau. Ceci représente un gain de temps d'autant plus substantiel que le nombre total de niveaux de mesure pour un cycle complet peut dépasser la centaine.

Une fois terminé le désancrage du patin au dernier niveau de mesure, il faut refermer les bras 31, 32 en vue de la remontée de la sonde en surface. A cet effet, on met en marche le moteur 35 dans le sens direct. Le manchon 65 est au départ bloqué en rotation par la bague de frottement 71, et les galets 66 dans la position D correspondant au débrayage.

Du fait de la rotation du moteur, les galets avancent dans le tronçon de rainure 68a.

Le manchon 65 se déplace jusqu'au contact entre les plateaux dentés 85, 86, puis les ressorts 43 exerçant un couple résistant sur la douille 88, le manchon 65 continue son déplacement en translation en repoussant la douille 88 contre l'action du ressort 52. Lorsque la douille 88 arrive au contact de la butée 107, le couple moteur est transmis à la douille 88 et surmonte le couple résistant offert par les ressorts 43 pour faire pivoter les bras 31, 32 jusqu'à leur position de fermeture le long du corps de sonde.

## Revendications

1. Procédé pour coupler un détecteur sismique à la paroi d'un forage, le détecteur étant placé dans une sonde (12) suspendue à un câble (13) à une profondeur sélectionnée, ladite sonde comprenant un corps allongé (29), un patin d'ancrage (30) placé à l'extrémité de bras-supports (31, 32) articulés sur ledit corps, ledit patin étant appliqué à la paroi du forage par des moyens élastiques (43), et un dispositif moteur (33, 36) adapté à fermer lesdits bras-supports, caractérisé par le fait
— que l'on applique au patin, par l'intermédiaire de ses bras-supports, au moyen dudit dispositif moteur, une force additionnelle qui tend à coupler, d'une manière rigide, le corps de sonde à la paroi du forage,
— que l'on mesure en permanence l'effort exercé sur le patin au moyen d'un capteur de force (150) placé dans le patin,
— et que l'on arrête et bloque le dispositif moteur lorsque la valeur d'effort ainsi mesurée atteint une valeur optimale déterminée.

2. Procédé selon la revendication 1, caractérisé par le fait que ladite valeur optimale déterminée est égale à environ deux fois le poids de la sonde dans l'air.

3. Sonde pour l'acquisition de signaux sismiques à différents niveaux dans un forage, du type comprenant:
— un corps allongé (29);
— des moyens de détection d'ondes sismiques (20) placés dans le corps;
— un patin (30) conçu pour être ancré dans la paroi du forage;
— un support de patin (31, 32) articulé sur le corps et pouvant occuper une position repliée sensiblement le long du corps;
— des moyens élastiques (43) pour appliquer au patin une force en vue de l'appliquer à la paroi du forage
— des moyens moteurs pour refermer les bras supports (31, 32) en comprimant les moyens élastiques,
caractérisée par le fait qu'une force additionelle d'ancrage est appliquée au patin parledit dispositif moteur (35, 36) par l'intermédiaire d'un dispositif de transmission rigide (40, 41, 34), et un capteur de force (150) est monté dans le patin pour produire un signal représentatif de l'effort exercé sur le patin, grâce à quoi le dispositif moteur peut être commandé pour que l'effort sur le patin soit à la valeur voulue en toutes circonstances.

4. Sonde selon la revendication 3, caractérisée par le fait que le support de patin comprend deux bras articulés sur le corps selon une configuration sensiblement en parallélogramme, à savoir un bras supérieur (32) et un bras inférieur (31), lequel est relié à une tige d'actionnement (34) à déplacement axial, constituant la sortie du dispositif de transmission, de manière à pivoter lorsque la tige exécute une translation, et le patin (30) est, au voisinage de son extrémité supérieure, relié en pivotement au bras supérieur (32) et est relié sensiblement en son milieu au bras inférieur (31) de manière à pouvoir s'écarter d'un côté ou de l'autre d'une position médiane parallèle à l'axe du corps de sonde (29).

5. Sonde selon la revendication 4, caractérisée par le fait que le patin comprend un corps creux allongé (140) dans lequel est logé le capteur de force, lequel est disposé généralement selon la direction longitudinale du corps de patin, et comprend une gaine (151), un élément de flexion (152) logé dans cette gaine, des jauges de contrainte (153) placées sur l'élément de flexion, ladite gaine étant reliée par un pivot (144) au bras inférieur (31) au voisinage de l'une de ses extrémités et mobile en translation par rapport au corps de patin selon sa direction longitudinale, ledit pivot traversant avec jeu des ouvertures (143) formées dans le corps de patin, lesdites ouvertures limitant le déplacement relatif entre le corps de patin et la gaine.

6. Sonde selon l'une des revendications 3, 4 et 5, caractérisée par le fait que les moyens élastiques agissant pour écarter le patin du corps, comprennent un premier ressort à lame (43a) fixé au corps par une extrémité et agissant par son autre extrémité sur le bras inférieur (31), et un second ressort à lame (43b) fixé au bras inférieur (31) et agissant sur le bras supérieur (32) au voisinage de son articulation avec le patin.

## Patentansprüche

1. Verfahren zum Ankoppeln eines seismischen Detektors an die Wandung eines Bohrlochs, welcher Detektor sich in einer Sonde (12) befindet, die an einem Kabel (13) auf einer vorgewählten Tiefe hängt, welche Sonde einen langgestreckten Sondenkörper (29), einen Verankerungsschuh (30), der am Ende von an den genannten Körper angelenkten Tragarmen (31, 32) plaziert ist, und die Bohrlochwandung durch elastische Mittel (43) angelegt wird, und eine Motoranordnung (35, 36) umfaßt, ausgebildet zum Einfalten der genannten Tragarme, dadurch gekennzeichnet, daß man auf den Schuh über seine Tragarme mittels der genannten Motoranordnung eine Zusatzkraft einwirken läßt mit der Tendenz, den Sondenkörper starr mit der Bohrlochwandung zu koppeln,

— daß man ständig die auf den Schuh wirkende Kraft mittels eines Kraftaufnehmers (150) mißt, der in dem Schuh plaziert ist,

— und daß man die Motoranordnung stillsetzt und bremst, sobald der Wert der so gemessenen Kraft einen vorgegebenen Optimalwert erreicht.

2. Verfahren nach Anspruch 1, dadurch gekennzeichnet, daß der genannte vorgegebene Optimalwert gleich etwa dem Zweifachen des Gewichtes der Sonde in Luft ist.

3. Sonde für die Gewinnung seismischer Signale auf unterschiedlichen Niveaus in einem Bohrloch der Bauart, die umfaßt:

— einen langgestreckten Sondenkörper (29);

— Mittel (20) zum Erfassen seismischer Wellen, plaziert in dem Körper;

— einen Schuh (30), ausgebildet zum Verankertwerden in der Bohrlochwandung;

— einen Schuhsupport (31, 32) angelenkt an den Sondenkörper, der eine eingefaltete Position im wesentlichen längs des Körpers einnehmen kann;

— elastische Mittel (43) zum Übertragen einer Kraft auf den Schuh im Sinne des Anlegens an die Bohrlochwandung;

— Antriebsmittel zum Einfalten der Arme (31, 32) unter Kompression der elastischen Mittel, dadurch gekennzeichnet, daß eine zusätzliche Verankerungskraft von der genannten Motoranordnung (35, 36) auf den Schuh über eine starre Getriebeanordnung (40, 41, 34) übertragen wird, und daß in dem Schuh ein Kraftaufnehmer (150) angeordnet ist zum Erzeugen eines Signals, das repräsentativ ist für die auf den Schuh wirkenden Kräfte, dank welchem die Motoranordnung gesteuert werden kann, derart, daß die auf den Schuh wirkende Kraft unter allen Umständen einen gewünschten Wert besitzt.

4. Sonde nach Anspruch 3, dadurch gekennzeichnet, daß die Schuhabstützung an den Sondenkörper gemäß einer im wesentlichen einem Parallelogramm entsprechenden Konfiguration angelenkte Arme umfaßt, nämlich einen oberen Arm (32) und einen unteren Arm (31), der mit einer Betätigungsstange (34) für Axialverlagerung verbunden ist, die den Ausgang der Getriebeanordnung derart bildet, daß bei Translationsbewegung der Stange eine Schwenkbewegung erfolgt, und daß der Schuh (30) nahe seinem oberen Ende schwenkbeweglich mit dem oberen Arm (32) verbunden ist und im wesentlichen in seiner Mitte mit dem unteren Arm (31) derart verbunden ist, daß er bezüglich einer mittleren Position, die parallel zur Achse des Sondenkörpers (29) ist, nach beiden Seiten auslegbar ist.

5. Sonde nach Anspruch 4, dadurch gekennzeichnet, daß der Schuh einen langgestreckten hohlen Schuhkörper (140) umfaßt, in welchem der Kraftaufnehmer untergebracht ist, der im wesentlichen in Längsrichtung des Schuhkörpers angeordnet ist, und eine Hülle (151), ein Biegeelement (152), plaziert in dieser Hülle, den Meßstreifen (153) auf dem Biegeelement plaziert, umfaßt, wobei die genannte Hülle über ein Gelenk (144) mit dem unteren Arm (31) nahe einem seiner Enden verbunden ist, und längsbeweglich ist relativ zum Sondenkörper in Richtung seiner Längsrichtung, wobei das genannte Gelenk mit Spiel Öffnungen (143) durchsetzt, die in dem Schuhkörper ausgebildet sind, welche Öffnungen die relative Verlagerung zwischen dem Schuhkörper und der Hülle begrenzen.

6. Sonde nach einem der Ansprüche 3, 4 und 5, dadurch gekennzeichnet, daß die auf den Schuhkörper im Sinne seiner Entfaltung wirkenden elastischen Mittel eine erste Blattfeder (43a) umfassen, die mit einem Ende an dem Sondenkörper befestigt ist, und mit ihrem anderen Ende auf den unteren Arm (31) einwirkt, sowie eine zweite Blattfeder (43b), die an dem unteren Arm (31) befestigt ist und auf den oberen Arm (32) nahe seiner Anlenkung an dem Schuh einwirkt.

**Claims**

1. Method for coupling a seismic detector to the wall of a borehole, the detector being placed in a sonde (12) suspended from a cable (13) at a predetermined depth, said sonde comprising an elongated body (29), an anchoring pad (30) placed at the end of supporting arms (31, 32) articulated on said body, said pad being applied to the wall of the borehole by resilient means (43), and a drive device (35, 36) adapted to close said supporting arms, characterized by the following steps:

— applying to the pad, through the supporting arms, by means of the drive device an additional force which tends to couple, in a rigid manner, the sonde body to the borehole wall;

— constantly measuring the force exerted on the pad by means of a force transducer (150) located in the pad;

— and stopping and blocking the drive device when the force value thus measured reaches an optimal given value.

2. Method according to claim 1, characterized by the fact that said optimal given value is equal to about twice the weight of the sonde in air.

3. Sonde for acquiring seismic signals at different levels in a borehole, of the type comprising:

— an elongated body (29);

— seismic wave detection means (20) in the body;

— a pad (30) adapted for anchoring against the borehole wall;

— a pad support (31, 32) articulated on the body member and capable of occupying a retracted position substantially along the body;

— resilient means (43) for applying to said pad a force for applying it to the borehole wall;

— a drive device (35, 36) for closing the support (31, 32) by compressing the resilient means, characterized by the fact that an additional anchoring force is applied to the pad, through a rigid transmission device (40, 41, 34), by means of the drive device (35, 36), and that a force transducer (150) is mounted in the pad in order to produce a signal representative of the effort exerted on the pad, thus allowing the drive device to be controlled such that the effort on the pad is at the desired value under any circumstances.

4. Sonde according to claim 3, characterized by the fact that the pad support comprises two arms articulated on the body substantially in a parallelogram configuration, namely an upper arm (32) and a lower arm (31), the lower arm being connected to an axially moving actuating rod (34) constituting the output of the transmission device, so as to pivot when the rod moves axially, and that the pad (30) is swivellably connected in the vicinity of its upper end to the upper arm (32) and is connected in its middle to the lower arm (31) to enable it to move away on either side of a middle position parallel to the axis of the sonde body (29).

5. Sonde according to claim 4, characterized by the fact that the pad comprises an elongated hollow body (140) in which is contained the force transducer, placed generally along the longitudinal direction of the pad body, and includes a sheath (151), a bending element (152) contained in this sheath, strain gauges (153) placed on the bending element, said sheath being connected by a pivot to the lower arm (31) in the vicinity of one of its end and mobile in translation with respect to the pad body along its longitudinal direction, said pivot going through openings (143) formed in the pad body, said openings limiting the relative movement between the pad body and the sheath.

6. Sonde according to any one of claims 3, 4 and 5, characterized by the fact that the resilient means acting to extend the pad away from the body comprise a first leaf spring (43a) fixed to the body by one end and acting through its other end on the lower arm (31), and a second leaf spring (43b) fixed to the lower arm (31) and acting on the upper arm (32) in the vicinity of its articulation with the pad.

FIG.1

FIG. 2

FIG. 3

**FIG. 4**

FIG. 5

FIG.6

0 112 189

**FIG. 7**

FIG. 8

0 112 189

FIG. 10

181
182
184
183

FIG. 9

154
170
155
153
165
169
150
168
167
151
152
166
153
160

8

0 112 189